# EUROPÄISCHE PATENTSCHRIFT

(11) **EP 1 917 103 B1**
(45) Veröffentlichungstag und Bekanntmachung des Hinweises auf die Patenterteilung: **02.06.2010**
(21) Anmeldenummer: 06792802.8
(22) Anmeldetag: 11.08.2006
(51) Int. Cl.: B01J 31/18

(54) **SOLVENSSTABILISIERTE METALLKOMPLEXE MIT SCHWACH KOORDINIERENDEN GEGENANIONEN ALS POLYMERISATIONSKATALYSATOREN**
SOLVENT-STABLE METAL COMPLEXES HAVING SLIGHTLY CO-ORDINATING COUNTER ANIONS AS POLYMERISATION CATALYSTS
COMPLEXES DE METAUX DE TRANSITION STABILISES PAR RAPPORT AUX SOLVANTS, CONTENANT DES ANIONS FAIBLEMENT COORDONNANTS EN TANT QUE CATALYSEURS DE POLYMERISATION

(30) Priorität: 12.08.2005 DE 102005038283
(43) Veröffentlichungstag der Anmeldung: 07.05.2008
(73) Patentinhaber: BASF SE, 67056 Ludwigshafen (DE)
(72) Erfinder: WALTER, Hans-Michael, 67251 Freinsheim (DE); HERRLICH-LOOS, Mirjam, 68165 Mannheim (DE); KUEHN, Fritz, Elmar, 85405 Nandlstadt (DE); ZHANG, Yanmei, 80809 München (DE); VOIT, Brigitte, 01187 Dresden (DE); NARAYANAN, Radha Krishnan, 01069 Dresden (DE)
(86) Internationale Anmeldenummer: PCT/EP2006/065271
(87) Internationale Veröffentlichungsnummer: WO 2007/020247

(56) Entgegenhaltungen:
- EP-A- 1 103 568
- EP-A1- 1 344 785
- EP-A2- 0 744 411
- WO-A-00/52072
- FR-A1- 2 576 594
- FELTZ, ADALBERT ET AL: "Molybdenum(III,V) compound, Mo2Cl60.6-CH3CN" ZEITSCHRIFT FUER ANORGANISCHE UND ALLGEMEINE CHEMIE , 358(1-2), 29-37 CODEN: ZAACAB; ISSN: 0044-2313, 1968, XP002414489
- BARRON, ANDREW R. ET AL: "Organonitrile complexes of iron(II) and ruthenium(II): x-ray crystal structure of trans-[Fe(NCMe)2(dmpe)2](BPh4)2" POLYHEDRON , 6(5), 1089-95 CODEN: PLYHDE; ISSN: 0277-5387, 1987, XP002414490
- VIERLE ET AL: "Solvent-ligated Manganese (II) Complexes for the Homopolymerization of Isobutene and the Copolymerization of Isobutene and Isoprene" CHEM. EUR. J., Bd. 10, 2004, Seiten 6323-6332, XP002414491 in der Anmeldung erwähnt

## Beschreibung

Die vorliegende Erfindung betrifft einen solvensstabilisierten Metallkatalysator mit schwach koordinierenden Gegenanionen der Formel I

[M(L)ₐ (Z)_{b} ]^{m+} m (A⁻) (I)

worin
- M: für Mo steht;
- L: für ein Solvensmolekül steht, das ausgewählt ist unter Nitrilen;
- Z: für Chlorid steht;
- A⁻: für ein schwach oder nicht koordinierendes Anion steht,
das ausgewählt ist unter B(Ar)₄ und verbrückten Anionen der Formel [(Ar)₃B-(µ-Y)-B(Ar)₃]⁻, wobei
Ar für Phenyl steht, das 1 bis 5 Substituenten tragen kann, die ausgewählt sind unter Halogen, C₁-C₄-Alkyl und C₁-C₄-Halogenalkyl; und
Y für eine verbrückende Gruppe steht;
- a: für eine ganze Zahl größer oder gleich zu steht;
- b: für eine ganze Zahl größer oder gleich 1 steht;
wobei die Summe aus a und b 4 bis 8 beträgt; und
- m: für eine ganze Zahl von 1 bis 6 steht.

Ferner betrifft die Erfindung die Verwendung eines solchen Katalysators bei der Polymerisation von olefinisch ungesättigten Verbindungen. Außerdem ist Gegenstand der Erfindung ein Verfahren zur Polymerisation von olefinisch ungesättigten Verbindungen und insbesondere zur Herstellung von hochreaktiven Isobutenhomo- oder -copolymeren in Gegenwart dieses Katalysators. Schließlich betrifft die Erfindung Copolymere, die aufgebaut sind aus Monomeren umfassend Isobuten und wenigstens eine vinylaromatische Verbindung und die durch das erfindungsgemäße Verfahren erhältlich sind.

Unter hochreaktiven Polyisobutenhomo- oder -copolymeren versteht man im Unterschied zu den sogenannten niedrigreaktiven Polymeren solche Polyisobutene, die einen hohen Gehalt an terminal angeordneten ethylenischen Doppelbindungen enthalten. Im Rahmen der vorliegenden Erfindung sollen unter hochreaktiven Polyisobutenen solche Polyisobutene verstanden werden, die einen Anteil an Vinyliden-Doppelbindungen (α-Doppelbindungen) von wenigstens 60 Mol-%, vorzugsweise von wenigstens 70 Mol-% und insbesondere von wenigstens 80 Mol-%, bezogen auf die Polyisobuten-Makromoleküle, aufweisen. Unter Vinylidengruppen werden im Sinne der vorliegenden Erfindung solche Doppelbindungen verstanden, deren Lage im Polyisobuten-Makromolekül durch die allgemeine Formel 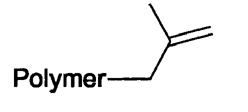 beschrieben wird, d.h. die Doppelbindung befindet sich in der Polymerkette in α-Stellung. "Polymer" steht für den um eine Isobuteneinheit verkürzten Polyisobutenrest. Die Vinylidengruppen zeigen die höchste Reaktivität, wohingegen eine weiter im Inneren der Makromoleküle liegende Doppelbindung keine oder auf jeden Fall geringere Reaktivität bei Funktionalisierungsreaktionen zeigt. Hochreaktive Polyisobutene werden unter anderem als Zwischenprodukte zur Herstellung von Additiven für Schmier- und Kraftstoffe verwendet, wie dies beispielsweise in DE-A 2702604 beschrieben wird.

Derartige hochreaktive Polyisobutene sind z. B. nach dem Verfahren der DE-A 2702604 durch kationische Polymerisation von Isobuten in flüssiger Phase in Gegenwart von Bortrifluorid als Katalysator erhältlich. Nachteilig hierbei ist, dass die dabei erhaltenen Polyisobutene eine relativ hohe Polydispersität aufweisen. Die Polydispersität ist ein Maß für die Molekulargewichtsverteilung der erhaltenen Polymerketten und entspricht dem Quotienten aus gewichtsmittlerem Molekulargewicht M_{w} und zahlenmittlerem Molekulargewicht Mₙ (PDI = M_{w}/Mₙ).

Polyisobutene mit einem ähnlich hohen Anteil an endständigen Doppelbindungen, jedoch mit einer engeren Molekulargewichtsverteilung sind beispielsweise nach den Verfahren der EP-A 145235, US 5,408,018 sowie WO 99/64482 erhältlich, wobei die Polymerisation in Gegenwart eines desaktivierten Katalysators, zum Beispiel eines Komplexes aus Bortrifluorid, Alkoholen und/oder Ethern, erfolgt. Nachteilig hierbei ist, dass bei Temperaturen deutlich unterhalb von 0 °C gearbeitet werden muss, um tatsächlich zu hochreaktiven Polyisobutenen zu gelangen.

Hochreaktive Polyisobutene sind auch durch lebende kationische Polymerisation von Isobuten und anschließender Dehydrohalogenierung des erhaltenen Polymerisationsprodukts erhältlich, beispielsweise gemäß dem Verfahren aus der US 5,340,881. Auch hier muss zur Herstellung hochreaktiver Polyisobutene bei tiefen Temperaturen gearbeitet werden.

Die EP-A 1344785 beschreibt ein Verfahren zur Herstellung hochreaktiver Polyisobutene unter Verwendung eines solvensstabilisierten Übergangsmetallkomplexes mit schwach koordinierenden Anionen als Polymerisationskatalysator. Als geeignete Metalle werden solche der 3. bis 12. Gruppe des Periodensystems allgemein genannt; in den Beispielen wird jedoch lediglich Mangan eingesetzt. Zwar kann bei diesem Verfahren auch bei Reaktionstemperaturen oberhalb von 0 °C polymerisiert werden, nachteilig ist jedoch, dass die Polymerisationszeiten inakzeptabel lang sind, so dass eine wirtschaftliche Nutzung dieses Verfahrens unattraktiv wird.

Aufgabe der vorliegenden Erfindung war es daher, einen Polymerisationskatalysator bereitzustellen, mit welchem ethylenisch ungesättigte Monomere vorteilhaft polymerisierbar sind. Insbesondere sollte der Katalysator die Herstellung von hochreaktiven Polyisobutenhomo- oder-copolymeren bei Temperaturen von wenigstens 0 °C mit kurzen Polymerisationszeiten ermöglichen.

Die Aufgabe wurde gelöst durch einen Katalysator der Formel I

[M(L)ₐ (Z)_{b}]^{m+} m(A⁻) (I)

worin
- M: für Mo steht;
- L: für ein Solvensmolekül steht, das ausgewählt ist unter Nitrilen;
- Z: für Chlorid steht;
- A⁻: für ein schwach oder nicht koordinierendes Anion steht,
das ausgewählt ist unter B(Ar)₄ und verbrückten Anionen der Formel [(Ar)₃B-(µ-Y)-B(Ar)₃]⁻, wobei
Ar für Phenyl steht, das 1 bis 5 Substituenten tragen kann, die ausgewählt sind unter Halogen, C₁-C₄-Alkyl und C₁-C₄-Halogenalkyl; und
Y für eine verbrückende Gruppe steht;
- a: für eine ganze Zahl größer oder gleich 1 steht;
- b: für eine ganze Zahl größer oder gleich 1 steht;
wobei die Summe aus a und b 4 bis 8 beträgt; und
- m: für eine ganze Zahl von 1 bis 6 steht.

Die nachfolgenden Angaben zu geeigneten und bevorzugten Ausgestaltungen der erfindungsgemäßen Gegenstände der Erfindung, insbesondere zum erfindungsgemäßen Katalysator, zum erfindungsgemäßen Verfahren und den darin eingesetzten Monomeren und Katalysatoren und zu den damit erhältlichen Polymeren, gelten sowohl allein für sich genommen als auch insbesondere in Kombination miteinander.

Unter Isobutenhomopolymeren versteht man im Rahmen der vorliegenden Erfindung solche Polymere, die bezogen auf das Polymer zu wenigstens 98 Mol-%, vorzugsweise zu wenigstens 99 Mol-% aus Isobuten aufgebaut sind. Dementsprechend versteht man unter Isobutencopolymeren solche Polymere, die mehr als 2 Mol-% Monomere einpolymerisiert enthalten, die von Isobuten verschieden sind.

Im Rahmen der vorliegenden Erfindung gelten für generisch definierte Reste folgende Definitionen:
C₁-C₄-Alkyl ist ein linearer oder verzweigter Alkylrest mit 1 bis 4 Kohlenstoffatomen. Beispiele hierfür sind Methyl, Ethyl, n-Propyl, Isopropyl, n-Butyl, 2-Butyl, Isobutyl oder tert-Butyl. C₁-C₂-Alkyl ist Methyl oder Ethyl, C₁-C₃-Alkyl ist darüber hinaus n-Propyl oder Isopropyl.
C₁-C₈-Alkyl ist ein linearer oder verzweigter Alkylrest mit 1 bis 8 Kohlenstoffatomen. Beispiele hierfür sind die oben genannten C₁-C₄-Alkylreste und darüber hinaus Pentyl, 1-ethylbutyl; 2-Methylbutyl, 3-Methylbutyl, 2,2-Dimethylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, Heptyl, Octyl und deren Konstitutionsisomere wie 2-Ethylhexyl.
C₁-C₄-Halogenalkyl steht für einen linearen oder verzweigten Alkylrest mit 1 bis 4 C-Atomen, der durch wenigstens einen Halogenrest substituiert ist. Beispiele hierfür sind CH₂F, CHF₂, CF₃, CH₂Cl, CHCl₂, CCl₃, CH₂FCH₂, CHF₂CH₂, CF₃CH₂ und dergleichen.

Aryl steht im Rahmen der vorliegenden Erfindung für gegebenenfalls substituiertes Phenyl, gegebenenfalls substituiertes Naphthyl, gegebenenfalls substituiertes Anthracenyl oder gegebenenfalls substituiertes Phenanthrenyl. Die Arylreste können 1 bis 5 Substituenten tragen, die beispielsweise ausgewählt sind unter Hydroxy, C₁-C₈-Alkyl, C₁-C₈-Halogenalkyl, Halogen, NO₂ und Phenyl. Beispiele für Aryl sind Phenyl, Naphthyl, Biphenyl, Anthracenyl, Phenanthrenyl, Tolyl, Nitrophenyl, Hydroxyphenyl, Chlorphenyl, Dichlorphenyl, Pentafluorphenyl, Pentachlorphenyl, (Trifluormethyl)phenyl, Bis(trifluormethyl)phenyl, (Trichlormethyl)phenyl, Bis(trichlormethyl)phenyl und Hydroxynaphthyl.

Arylalkyl steht im Rahmen der vorliegenden Erfindung für eine Arylgruppe, die über eine Alkylengruppe gebunden ist. Beispiele hierfür sind Benzyl und 2-Phenylethyl.

C₁-C₄-Carbonsäuren stehen für aliphatische Carbonsäuren mit 1 bis 4 Kohlenstoffatomen. Beispiele hierfür sind Ameisensäure, Essigsäure, Propionsäure, Buttersäure und Isobuttersäure.

C₁-C₄-Alkohol steht für einen wie oben definierten C₁-C₄-Alkylrest, in dem wenigstens ein Wasserstoffatom durch eine Hydroxygruppe ersetzt ist. Vorzugsweise steht es für einen einwertigen Alkohol, d.h. für eine C₁-C₄-Akylgruppe, in der ein Wasserstoffatom durch eine Hydroxygruppe ersetzt ist Beispiele hierfür sind Methanol, Ethanol, Propanol, Isopropanol, n-Butanol, sec-Butanol, Isobutanol und tert-Butanol.

Halogen steht im Rahmen der vorliegenden Erfindung für Fluor, Chlor, Brom oder Iod.

Vinylaromatische Verbindungen sind im Rahmen der vorliegenden Erfindung Styrol und Styrol-Derivate, wie α-Methylstyrol, C₁-C₄-Nkylstyrole, wie 2-, 3- oder 4-Methylstyrol und 4-tert-Butylstyrol, und Halogenstyrole, wie 2-, 3- oder 4-Chlorstyrol. Bevorzugte vinylaromatische Verbindungen sind Styrol und 4-Methylstyrol sowie Gemische davon, wobei Styrol besonders bevorzugt ist.

Vorzugsweise liegt M in einer Oxidationszahl von II, III oder IV, besonders bevorzugt von II oder III und insbesondere von III vor.

L steht für ein Solvensmolekül, d. h. für ein Lösungsmittelmolekül, das koordinativ binden kann. Hierbei handelt es sich um Moleküle, die üblicherweise als Lösungsmittel eingesetzt werden, gleichzeitig aber über wenigstens eine dative Gruppierung, z.B, über ein freies Elektronenpaar, verfügen, die eine koordinative Bindung zum Zentralmetall eingehen kann. Beispiele hierfür sind Nitrile, wie Acetonitril, Propionitril und Benzonitril.

Bevorzugte Solvensmoleküle sind solche, die einerseits koordinativ an das Zentralmetall binden, andererseits jedoch keine starken Lewisbasen darstellen, so dass sie im Verlauf der Polymerisation aus der Koordinationssphäre des Zentralmetalls leicht verdrängt werden können. Vorzugsweise sind die Solvens-Liganden L, die gleich oder verschieden sein können, ausgewählt unter Nitrilen der Formel N≡C-R¹, worin R¹ für C₁-C₈-Alkyl oder Aryl steht, und offenkettigen und cyclischen Ethern.

In den Nitrilen steht der Rest R¹ vorzugsweise für C₁-C₄-Alkyl oder Phenyl. Beispiele für solche Nitrile sind Acetonitril, Propionitril, Butyronitril, Pentylnitril und Benzonitril. Besonders bevorzugt steht R¹ für Methyl, Ethyl oder Phenyl, d. h. das Nitril ist besonders bevorzugt unter Acetonitril, Propionitril und Benzonitril ausgewählt. Insbesondere steht R¹ für Methyl oder Phenyl, d. h. das Nitril steht insbesondere für Acetonitril oder Benzonitril. Speziell steht R¹ für Methyl, d.h. das Nitril steht speziell für Acetonitril.

Besonders bevorzugt steht L für ein Nitril der Formel N≡C-R¹, worin R¹ vorzugsweise für Methyl, Ethyl oder Phenyl, besonders bevorzugt für Methyl oder Phenyl und insbesondere für Methyl steht.

L kann für gleiche oder verschiedene Solvensmoleküle stehen. Bevorzugt stehen in Verbindung I jedoch alle L für die gleichen Solvens-Liganden.

Erfindungsgemäß leitet sich Z von Chlorid ab.

b steht für die Anzahl der koordinativ gebundenen Liganden.

Die Koordinationszahl des Metalls, d.h. die Summe aus a und b, beträgt 4 bis 8. Dabei ist es erforderlich, dass sich in der Koordinationssphäre des Metalls wenigstens ein Ligand L und wenigstens ein Ligand Z befindet

a steht vorzugsweise für eine ganze Zahl von 1 bis 5. a steht besonders bevorzugt für 5.

b steht vorzugsweise für eine ganze Zahl von 1 bis 4. b steht besonders bevorzugt für 1.

Die Summe aus a und b beträgt vorzugsweise 4 bis 6. Besonders bevorzugt beträgt sie 6. In diesem Fall liegen die Metallkomplexe vorzugsweise in oktaedrischer oder nahezu oktaedrischer Form vor.

m steht vorzugsweise für eine ganze Zahl von 1 bis 3. Speziell steht m für 2.

A⁻ steht für ein schwach oder nicht koordinierendes Anion. Schwach oder nicht koordinierende Anionen sind solche, die mit dem Zentralatom keine koordinative Bindung eingehen, die also keine Lewis-basische Gruppierung besitzen. Generell handelt es sich bei schwach oder nicht koordinierenden Anionen um solche, deren negative Ladung über eine große Fläche von nicht nukleophilen und chemisch robusten Gruppen delokalisiert ist. Beispielsweise handelt es sich bei schwach bzw. nicht koordinierenden Anionen um ein- oder zweikernige Anionen mit einem Lewis-sauren Zentralatom, dessen Elektronenmangel jedoch durch das Anbinden eines schwach koordinierenden Substituenten kompensiert ist

Erfindungsgemäß ist das schwach oder nicht koordinierende Anion A- ausgewählt unter B(Ar)₄ und Verbrückten Anionen der Formel [(Ar)₃B-(µ -Y)-B(Ar)₃]-, wobei
- Ar: für Phenyl steht, das 1 bis 5 Substituenten tragen kann, die ausgewählt sind unter Halogen, C₁-C₄-Alkyl und C₁-C₄-Halogenalkyl; und
- Y: für eine verbrückende Gruppe steht;
Ar steht beispielsweise für Phenyl, Pentafluorphenyl oder Bis(trifluormethyl)phenyl, z.B. 3,5-Bis(trifluormethyl)phenyl. Vorzugsweise steht Ar im Anion B(Ar)₄- für ein substituiertes Phenyl, besonders bevorzugt für Bis(trifluormethyl)phenyl, z.B. 3,5-Bis(trifluormethyl)phenyl, oder insbesondere für Pentafluorphenyl. Auch in den verbrückten Anionen steht Ar vorzugsweise für eine substituierte Phenylgruppe, besonders bevorzugt für Bis(trifluormethyl)phenyl, z.B. 3,5-Bis(trifluormethyl)phenyl, oder insbesondere für Pentafluorphenyl.

Bei der verbrückenden Gruppe Y kann es sich beispielsweise um CN, NH₂ oder eine cyclische verbrückende Einheit handeln. Cyclische verbrückende Einheiten sind solche Cyclen, die über zwei Lewis-basische Gruppierungen gebunden sind, Beispiele hierfür sind gesättigte oder ungesättigte Heterocyclen mit wenigstens 2 Heteroatomen, vorzugsweise mit wenigstens 2 N-Atomen, wie Pyrazoldiyl, Pyrazolindiyl, Pyrazolidindiyl, Imidazoldiyl, Imidazolindiyl, Imidazolidindlyl, Triazoldiyl, Triazolindiyl, Triazolidindiyl, Pyrimidindiyl, Pyrazindiyl und Pyridazindiyl. Bevorzugt sind dabei aromatische Heterocyclen. Besonders bevorzugte cyclische verbrückende Einheiten sind Imidazol-1,3-yl und Triazoldiyl, z.B. [1,2,4]Triazol-2,4-diyl.

Vorzugsweise ist Y unter cyclischen verbrückenden Gruppen ausgewählt, wobei Triazoldiyl und insbesondere Imidazol-1,3-yl besonders bevorzugt sind.

Bevorzugt sind solche Borate B(Ar)₄-, in denen Ar für 3,5-Bis(trifluormethyl)phenyl oder insbesondere Pentafluorphenyl steht. Bevorzugte verbrückte Anionen sind solche, in denen Ar für Pentafluorphenyl steht und Y für eine Imidazol-1,3-Brücke steht.

Die Katalysatoren der Formel I können nach allgemein bekannten Verfahren zur Herstellung von Übergangsmetallkomplexen mit Solvensmolekülen in der Koordinationssphäre hergestellt werden. Die Einführung des schwach oder nicht koordinierenden Anions A- kann in Analogie zu bekannten Verfahren erfolgen, wie sie beispielsweise in W. E. Buschmann, J. S. Miller, Chem. Eur. J. 1998, 4(9), 1731, R. E. LaPointe, G.R. Ruff, K. A. Abboud, J. Klosin, New Family of Weakly Coordinating Anions, J. Am. Chem. Soc. 2000, 122(39), 9560, W. E. Buschmann, J. S. Miller, Inorganic Chemistry 33, 2002, 83, O. Nuyken, F. E. Kühn, Angew. Chem. Int. Ed. Engl. 2003, 42, 1307, O. Nuyken, F. E. Kühn, Chem. Eur. J, 2004, 10, 6323 und EP-A-1344785 sowie in der darin zitierten Literatur beschrieben sind, worauf hiermit in vollem Umfang Bezug genommen wird.

So kann man den Katalysator der Formel I beispielsweise herstellen, indem man ein Salz der Formel M^{x+}-Z^{y-}x/y in einem Lösungsmittel, das dem Solvensmolekül L entspricht, löst. Für den Fall, dass Z nicht für Cl steht, wird auch ein Salz der Formel M^{x+}(Cl⁻)ₓ zugegeben. Dann wird diese Lösung zur Einführung des Anions A⁻ mit einem Silbersalz des entsprechenden Anions, insbesondere mit [Ag(L)₄]⁺(A⁻), vorzugsweise bei einer Temperatur von -10 °C bis Raumtemperatur, versetzt. Das dabei präzipitierende Silberchlorid wird aus der Reaktionslösung beispielsweise durch Filtration Dekantieren oder Zentrifugieren abgetrennt. Anschließend wird in der Regel das Lösungsmittel zumindest teilweise entfernt, was beispielsweise destillativ, insbesondere unter verringertem Druck, erfolgen kann, Die Isolierung des Katalysators I kann nach üblichen Verfahren erfolgen, beispielsweise durch Entfernen des Lösungsmittels bis zur Trockne oder vorzugsweise durch Kristallisation in geeigneten Lösungsmitteln.

Alternativ kann man isolierte ein- oder mehrkernige Komplexe des Metalls M mit Z und L als Liganden der oben beschriebenen Ionenaustauschmethode zur Einführung des Anions A- unterwerfen. Die Herstellung solcher isolierbarer Solvens-Komplexe kann in Analogie zu Verfahren erfolgen, wie sie beispielsweise in F. A. Cotton, R. H. Niswander, J. C. Sekutowski, Inorg. Chem. 1979, 18, 1149, I. R. Anderson, J. C. Sheldon, Aust. J. Chem. 1965, 18, 271, J. V. Brencic, F. A. Cotton, Inorg. Chem. 1969, 8, 7 und R. W. McGaff, N. C. Dopke, R. K. Hayashi, D. R. Powell, P. M. Treichel, Polyhedron 2000, 19, 1245 und in der darin zitierten Literatur beschrieben sind, worauf hiermit in vollem Umfang Bezug genommen wird.

Ein weiterer Gegenstand der vorliegenden Erfindung ist die Verwendung des erfindungsgemäßen Katalysators als Polymerisationskatalysator bei der Polymerisation von olefinisch ungesättigten Verbindungen.

Bevorzugte olefinisch ungesättigte Verbindungen sind nachstehend genannt.

Besonders bevorzugt ist die Verwendung des erfindungsgemäßen Katalysators I zur Herstellung von hochreaktiven Isobutenhomo- oder -copolymeren und insbesondere von Isobutenhomo- oder -copolymeren mit einem Gehalt an terminalen Vinyliden-Doppelbindungen von wenigstens 80 Mol-%, besonders bevorzugt wenigstens 85 Mol-%, stärker bevorzugt wenigstens 90 Mol-% und insbesondere wenigstens 95 Mol-%, zum Beispiel etwa 100 Mol-%.

Bevorzugte Isobutencopolymere sind nachstehend genannt.

Ein weiterer Gegenstand der vorliegenden Erfindung ist ein Verfahren zur Polymerisation von olefinisch ungesättigten Monomeren, dadurch gekennzeichnet, dass man die olefinisch ungesättigten Monomere in Gegenwart eines erfindungsgemäßen Katalysators der Formel I polymerisiert.

Auf die vorstehend gemachten Ausführungen zu bevorzugten Komponenten des Katalysators (M, L, Z, A-, a, b und m) wird hiermit Bezug genommen.

Im erfindungsgemäßen Verfahren werden die Katalysatoren der Formel I in Bezug auf die eingesetzten Monomere in dem Molverhältnis von 1:10 bis 1:1.000.000, besonders bevorzugt von 1:5.000 bis 1:500.000 und insbesondere von 1:5000 bis 1:100.000, z.B. von 1:10.000 bis 1:100.000, eingesetzt.

Die Konzentration der eingesetzten Katalysatoren I in der Reaktionsmischung liegt im Bereich von vorzugsweise 0,01 mmol/I bis 5 mmol/I, besonders bevorzugt 0,01 bis 1 mmol/I, stärker bevorzugt 0,01 bis 0,5 mmol/I und insbesondere 0,01 bis 0,1 mmol/I.

Als ethylenisch ungesättigte Monomere kommen alle Monomere in Betracht, die unter kationischen Polymerisationsbedingungen polymerisierbar sind. Beispiele hierfür sind lineare Alkene, wie Ethen, Propen, n-Buten, n-Penten und n-Hexen, Alkadiene, wie Butadien und Isopren, Isoalkene, wie Isobuten, 2-Methylbuten-1, 2-Methylpenten-1, 2-Methylhexen-1, 2-Ethylpenten-1, 2-Ethylhexen-1 und 2-Propylhepten-1, Cycloalkene, wie Cyclopenten und Cyclohexen, vinylaromatische Verbindungen, wie Styrol, α-Methylstyrol, 2-, 3- und 4-Methylstyrol, 4-tert-Butylstyrol sowie 2-, 3- und 4-Chlorstyrol, und Olefine, die eine Silylgruppe aufweisen, wie 1-Trimethoxysilylethen, 1-(Trimethoxysilyl)propen, 1-(Trimethoxysilyl)-2-methylpropen-2, 1-[Tri(methoxyethoxy)silyl]ethen, 1-[Tri(methoxyethoxy)silyl]propen, und 1-[Tri(methoxyethoxy)silyl]-2-methylpropen-2, sowie Gemische dieser Monomere.

Bevorzugte Monomere sind Isobuten, Isobuten-haltige Monomerengemische, Styrol, Styrol-haltige Monomerengemische, Styrolderivate, insbesondere α-Methylstyrol und 4-Methylstyrol, die oben genannten Cycloalkene, die oben genannten Alkadiene sowie Gemische davon.

Besonders bevorzugte Monomere sind Isobuten, Isobuten-haltige Monomerengemische, Styrol, Styrol-haltige Monomerengemische sowie Gemische davon. Insbesondere setzt man in das erfindungsgemäße Polymerisationsverfahren Isobuten, Styrol oder Gemische davon als Monomere ein.

Wird Isobuten oder ein Isobuten-haltiges Monomerengemisch als zu polymerisierendes Monomer eingesetzt, so eignet sich als Isobuten-Quelle sowohl Isobuten selbst als auch Isobuten-haltige C₄-Kohlenwasserstoffströme, beispielsweise C₄-Raffinate, C₄-Schnitte aus der Isobutan-Dehydrierung, C₄-Schnitte aus Steamcrackern und aus FCC-Crackern (fluid catalysed cracking), sofern sie weitgehend von darin enthaltenem 1,3-Butadien befreit sind. Geeignete C₄-Kohlenwasserstoffströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den C₄-Kohlenwasserstoffströmen im Bereich von 40 bis 60 Gew.-%. Das Isobuten-haltige Monomerengemisch kann geringe Mengen an Kontaminanten, wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien, wie Aktivkohle, Molekularsiebe oder Ionenaustauscher, aus dem Isobuten-haltigen Monomerengemisch entfernt.

Es können auch Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden sollen, enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

Als copolymerisierbare Monomere kommen Vinylaromaten wie Styrol und α-Methylstyrol, C₁-C₄-Alkylstyrole wie 2-, 3- und 4-Methylstyrol sowie 4-tert-Butylstyrol, Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1 in Betracht. Als Comonomere kommen weiterhin Olefine in Betracht, die eine Silylgruppe aufweisen, wie 1-Trimethoxysilylethen, 1-(Trimethoxysilyl)propen, 1-(Trimethoxysilyl)-2-methylpropen-2, 1-[Tri(methoxyethoxy)silyl]ethen, 1-[Tri(methoxyethoxy)silyl]propen, und 1-[Tri(meth-oxyethoxy)silyl]-2-methylpropen-2.

Sollen mit dem erfindungsgemäßen Verfahren Copolymere hergestellt werden, so kann das Verfahren so ausgestaltet werden, dass bevorzugt statistische Polymere oder bevorzugt Blockcoplymere entstehen. Zur Herstellung von Blockcopolymeren kann man beispielsweise die verschiedenen Monomere nacheinander der Polymerisationsreaktion zuführen, wobei die Zugabe des zweiten Comonomers insbesondere erst dann erfolgt, wenn das erste Comonomer zumindest teilweise schon polymerisiert ist. Auf diese Weise sind sowohl Diblock-, Triblock- und höhere Blockcopolymere zugänglich, die je nach Reihenfolge der Monomerzugabe einen Block des einen oder anderen Comonomers als terminalen Block aufweisen. Blockcopolymere entstehen in einigen Fällen aber auch dann, wenn alle Comonomere zwar gleichzeitig der Polymerisationsreaktion zugeführt werden, eines davon aber signifikant schneller polymerisiert als das oder die anderen. Dies ist insbesondere dann der Fall, wenn Isobuten und eine vinylaromatische Verbindung, insbesondere Styrol, im erfindungsgemäßen Verfahren copolymerisiert werden. Dabei entstehen vorzugsweise Blockcopolymere mit einem terminalen Polyisobutenblock. Dies ist darauf zurückzuführen, dass die vinylaromatische Verbindung, speziell Styrol, signifikant schneller polymerisiert als Isobuten.

Die Polymerisation kann sowohl kontinuierlich als auch diskontinuierlich erfolgen. Kontinuierliche Verfahren können in Analogie zu bekannten Verfahren des Standes der Technik zur kontinuierlichen Polymerisation von Isobuten in Gegenwart von Lewissäure-Katalysatoren in flüssiger Phase durchgeführt werden.

Das erfindungsgemäße Verfahren ist sowohl für eine Durchführung bei niedrigen Temperaturen, z.B. bei - 78 bis 0 °C, als auch bei höheren Temperaturen, d.h. bei wenigstens 0 °C, z.B. bei 0 bis 100 °C, geeignet. Die Polymerisation wird vor allem aus wirtschaftlichen Gründen vorzugsweise bei wenigstens 0 °C, z.B. bei 0 bis 100°C, besonders bevorzugt bei 20 bis 60°C durchgeführt, um den Energie- und Materialverbrauch, der für eine Kühlung erforderlich ist, möglichst gering zu halten. Sie kann jedoch genauso gut bei niedrigeren Temperaturen, z.B. bei - 78 bis <0 °C, vorzugsweise bei - 40 bis - 10 °C, durchgeführt werden.

Erfolgt die Polymerisation bei oder oberhalb der Siedetemperatur des zu polymerisierenden Monomers oder Monomerengemischs, so wird sie vorzugsweise in Druckgefäßen, beispielsweise in Autoklaven oder in Druckreaktoren, durchgeführt.

Vorzugsweise wird die Polymerisation in Gegenwart eines inerten Verdünnungsmittels durchgeführt. Das verwendete inerte Verdünnungsmittel sollte geeignet sein, die während der Polymerisationsreaktion in der Regel auftretende Erhöhung der Viskosität der Reaktionslösung soweit zu verringern, dass die Abführung der entstehenden Reaktionswärme gewährleistet werden kann. Als Verdünnungsmittel sind solche Lösungsmittel oder Lösungsmittelgemische geeignet, die gegenüber den eingesetzten Reagenzien inert sind. Geeignete Verdünnungsmittel sind beispielsweise aliphatische Kohlenwasserstoffe, wie Butan, Pentan, Hexan, Heptan, Octan und Isooctan, cycloaliphatische Kohlenwasserstoffe, wie Cyclopentan und Cyclohexan, aromatische Kohlenwasserstoffe, wie Benzol, Toluol und die Xylole, und halogenierte Kohlenwasserstoffe, wie Methylchlorid, Dichlormethan und Trichlormethan, sowie Mischungen der vorgenannten Verdünnungsmittel. Bevorzugt verwendet man wenigstens einen halogenierten Kohlenwasserstoff, gegebenenfalls im Gemisch mit wenigstens einem der vorstehend genannten aliphatischen oder aromatischen Kohlenwasserstoffe. Insbesondere verwendet man Dichlormethan. Vorzugsweise werden die Verdünnungsmittel vor ihrem Einsatz von Verunreinigungen wie Wasser, Carbonsäuren oder Mineralsäuren befreit, beispielsweise durch Adsorption an feste Adsorbentien, wie Aktivkohle, Molekularsiebe oder Ionenaustauscher.

Vorzugsweise wird die Polymerisation unter weitgehend aprotischen, insbesondere unter wasserfreien, Reaktionsbedingungen durchgeführt. Unter aprotischen beziehungsweise wasserfreien Reaktionsbedingungen versteht man, dass der Wassergehalt (bzw. der Gehalt an protischen Verunreinigungen) im Reaktionsgemisch weniger als 50 ppm und insbesondere weniger als 5 ppm beträgt. In der Regel wird man daher die Einsatzstoffe vor ihrer Verwendung physikalisch und/oder durch chemische Maßnahmen trocknen. Insbesondere hat es sich bewährt, die als Lösungsmittel eingesetzten aliphatischen oder alicyclischen Kohlenwasserstoffe nach üblicher Vorreinigung und Vortrocknung mit einer metallorganischen Verbindung, beispielsweise einer Organolithium-, Organomagnesium- oder Organoaluminium-Verbindung, in einer Menge zu versetzen, die ausreicht, um die Wasserspuren aus dem Lösungsmittel zu entfernen. Das so behandelte Lösungsmittel wird dann vorzugsweise direkt in das Reaktionsgefäß einkondensiert. In ähnlicher Weise kann man auch mit den zu polymerisierenden Monomeren, insbesondere mit Isobuten oder mit den Isobuten-haltigen Mischungen verfahren. Auch die Trocknung mit anderen üblichen Trockenmitteln, wie Molekularsieben oder vorgetrockneten Oxiden wie Aluminiumoxid, Siliciumdioxid, Calciumoxid oder Bariumoxid, ist geeignet. Die halogenierten Lösungsmittel, für die eine Trocknung mit Metallen, wie Natrium oder Kalium, oder mit Metallalkylen nicht in Betracht kommt, werden mit dafür geeigneten Trocknungsmitteln, beispielsweise mit Calciumchlorid, Phosphorpentoxid oder Molekularsieben, von Wasser(spuren) befreit. In analoger Weise kann man auch diejenigen Einsatzstoffe trocknen, für die eine Behandlung mit Metallalkylen ebenfalls nicht in Betracht kommt, beispielsweise vinylaromatische Verbindungen.

Die Polymerisation des Monomers und insbesondere des Isobutens bzw. des isobutenhaltigen Einsatzmaterials, erfolgt spontan beim Vermischen des Initiatorsystems (d.h. des Katalysators I) mit dem Monomer bei der gewünschten Reaktionstemperatur. Hierbei kann man so vorgehen, dass man das Monomer gegebenenfalls im Lösungsmittel vorlegt, auf Reaktionstemperatur bringt und anschließend den Katalysator I zugibt. Man kann auch so vorgehen, dass man den Katalysator I gegebenenfalls im Lösungsmittel vorlegt und anschließend das Monomer zugibt. Als Polymerisationsbeginn gilt dann derjenige Zeitpunkt, an dem alle Reaktanden im Reaktionsgefäß enthalten sind. Zur Herstellung von Copolymeren kann man so vorgehen, dass man die Monomere, gegebenenfalls im Lösungsmittel, vorlegt und anschließend den Katalysator I zugibt. Die Einstellung der Reaktionstemperatur kann vor oder nach der Katalysatorzugabe erfolgen. Man kann auch so vorgehen, dass man zunächst nur eines der Monomere, gegebenenfalls im Lösungsmittel, vorlegt, anschließend den Katalysator I zugibt und erst nach einer gewissen Zeit, z.B. wenn wenigstens 60 %, wenigstens 80 % oder wenigstens 90 % des Monomers umgesetzt sind, das oder die weiteren Monomere zugibt. Alternativ kann man den Katalysator I, gegebenenfalls im Lösungsmittel, vorlegen, anschließend die Monomere gleichzeitig oder nacheinander zugeben und dann die gewünschte Reaktionstemperatur einstellen. Als Polymerisationsbeginn gilt hier derjenige Zeitpunkt, zu dem der Katalysator und wenigstens eines der Monomere im Reaktionsgefäß enthalten sind.

Neben der hier beschriebenen diskontinuierlichen Vorgehensweise kann man die Polymerisation auch als kontinuierliches Verfahren ausgestalten. Hierbei führt man die Einsatzstoffe, d.h. das oder die zu polymerisierenden Monomere, gegebenenfalls das Lösungsmittel sowie den Katalysator der Polymerisationsreaktion kontinuierlich zu und entnimmt kontinuierlich Reaktionsprodukt, so dass sich im Reaktor mehr oder weniger stationäre Polymerisationsbedingungen einstellen. Das oder die zu polymerisierenden Monomere können als solche, verdünnt mit einem Lösungsmittel oder als monomerhaltiger Kohlenwasserstoffstrom zugeführt werden.

Zum Reaktionsabbruch wird das Reaktionsgemisch vorzugsweise desaktiviert, beispielsweise durch Zugabe einer protischen Verbindung, insbesondere durch Zugabe von Wasser, Alkoholen, wie Methanol, Ethanol, n-Propanol und Isopropanol oder deren Gemische mit Wasser, oder durch Zugabe einer wässrigen Base, z.B. einer wässrigen Lösung eines Alkali- oder Erdalkalihydroxids, wie Natriumhydroxid, Kaliumhydroxid, Magnesiumhydroxid oder Calciumhydroxid, eines Alkali- oder Erdalkalicarbonats, wie Natrium-, Kalium-, Magnesium- oder Calciumcarbonat, oder eines Alkali- oder Erdalkalihydrogencarbonats, wie Natrium-, Kalium-, Magnesium- oder Calciumhydrogencarbonat.

In einer bevorzugten Ausführungsform der Erfindung dient das erfindungsgemäße Verfahren zur Herstellung von hochreaktiven Isobutenhomo- oder -copolymeren. Besonders bevorzugt dient es zur Herstellung von hochreaktiven Isobutenhomo- oder -copolymeren mit einem Gehalt an terminalen Vinyliden-Doppelbindungen (α-Doppelbindungen) von wenigstens 80 Mol-%, vorzugsweise von wenigstens 85 Mol-%, besonders bevorzugt von wenigstens 90 Mol-% und insbesondere von wenigstens 95 Mol-%, z.B. von etwa 100 Mol-%.

Bevorzugte Isobuten-Copolymere sind Copolymere, die aufgebaut sind aus Monomeren umfassend Isobuten und wenigstens eine vinylaromatische Verbindung. Besonders bevorzugte Copolymere sind Isobuten-Styrol-Copolymere.

Dementsprechend dient das erfindungsgemäße Verfahren in einer bevorzugten Ausführungsform zur Herstellung von Copolymeren, die aufgebaut sind aus Monomeren umfassend Isobuten und wenigstens eine vinylaromatische Verbindung, und speziell von Isobuten-Styrol-Copolymeren, mit einem Gehalt an terminalen Vinyliden-Doppelbindungen (α-Doppelbindungen) von wenigstens 50 Mol-%. Besonders bevorzugt dient es zur Herstellung von hochreaktiven Copolymeren, die aufgebaut sind aus Monomeren umfassend Isobuten und wenigstens eine vinylaromatische Verbindung, und speziell von hochreaktiven Isobuten-Styrol-Copolymeren, mit einem Gehalt an terminalen Vinyliden-Doppelbindungen (α-Doppelbindungen) von wenigstens 60 Mol-%, vorzugsweise von wenigstens 70 Mol-%, besonders bevorzugt von wenigstens 80 Mol-%, stärker bevorzugt von wenigstens 85 Mol-%, noch stärker bevorzugt von wenigstens 90 Mol-% und insbesondere von wenigstens 95 Mol-%, z.B. von etwa 100 Mol-%.

Zur Herstellung solcher Copolymere wird Isobuten oder ein Isobuten-haltiger Kohlenwasserstoffschnitt mit Styrol copolymerisiert. Besonders bevorzugt enthält ein solches Monomerengemisch 5 bis 95 Gew.-%, besonders bevorzugt 30 bis 70 Gew.-% Styrol.

Bei der Copolymerisation von Isobuten oder Isobuten-haltigen Kohlenwasserstoff schnitten mit wenigstens einer vinylaromatischen Verbindung, insbesondere mit Styrol, entstehen auch bei gleichzeitiger Zugabe der Comonomere vorzugsweise Blockcopolymere, wobei der Isobutenblock in der Regel den terminalen, d.h. den zuletzt gebildeten Block darstellt.

Vorzugsweise weisen die mit dem erfindungsgemäßen Verfahren hergestellten Polymere, insbesondere die Isobutenhomo- oder -copolymere und speziell die Isobutenhomopolymere eine Polydispersität (PDI = M_{w}/Mₙ) von vorzugsweise 1,0 bis 3,0, besonders bevorzugt von 1,0 bis 2,5, stärker bevorzugt von 1,0 bis 2,0, noch stärker bevorzugt von 1,0 bis 1,8 und insbesondere von 1 bis 1,5 auf.

Vorzugsweise besitzen die mit dem erfindungsgemäßen Verfahren hergestellten Polymere, insbesondere die Isobutenhomo- oder -copolymere, ein zahlenmittleres Molekulargewicht Mₙ von 500 bis 1.000.000, besonders bevorzugt von 500 bis 250.000, stärker bevorzugt von 500 bis 100.000, noch stärker bevorzugt von 500 bis 80.000 und insbesondere von 500 bis 60.000.

Isobutenhomopolymere besitzen noch stärker bevorzugt ein zahlenmittleres Molekulargewicht Mₙ von 500 bis 10.000 und insbesondere von 500 bis 5.000, z.B. von etwa 1000 oder von etwa 2300.

Copolymere, die aufgebaut sind aus Monomeren umfassend Isobuten und wenigstens eine vinylaromatische Verbindung, und speziell Isobuten-Styrol-Copolymere besitzen, insbesondere dann, wenn sie als Thermoplasten eingesetzt werden sollen, ein zahlenmittleres Molekulargewicht Mₙ von vorzugsweise 500 bis 1.000.000, besonders bevorzugt von 10.000 bis 1.000.000, stärker bevorzugt von 50.000 bis 1.000.000 und insbesondere von 50.000 bis 500.000.

Die im Rahmen der Erfindung gemachten Angaben zu gewichtsmittleren und zahlenmittleren Molekulargewichten M_{w} und Mₙ und ihrem Quotienten PDI (PDI = M_{w}/Mₙ) beziehen sich auf Werte, die mittels Gelpermeationschromatographie bestimmt wurden. Der Anteil an terminal angeordneten ethylenischen Doppelbindungen wurde mittels ¹H-NMR bestimmt.

Durch das erfindungsgemäße Verfahren werden ethylenisch ungesättigte Monomere, die unter kationischen Bedingungen polymerisierbar sind, mit hohen Umsätzen in kurzen Reaktionszeiten selbst bei relativ hohen Polymerisationstemperaturen erfolgreich polymerisiert. Bei Verwendung von Isobuten oder Isobuten-haltigen Monomerengemischen erhält man hochreaktive Isobutenhomo- oder -copolymere mit einem hohen Gehalt an terminalen Vinyliden-Doppelbindungen und mit einer recht engen Molekulargewichtsverteilung.

Das erfindungsgemäße Verfahren kann nicht nur bei Temperaturen von wenigstens 0 °C erfolgreich durchgeführt werden, es erlaubt zudem bei einem vergleichbaren Umsatz und vergleichbaren Produkten deutlich kürzere Reaktionszeiten als das Verfahren der EP 1344785.

Vorzugsweise wird für einen Isobutenumsatz von wenigstens 80 %, z.B. von wenigstens 90 %, eine Polymerisationszeit von höchstens 2 Stunden, besonders bevorzugt von höchstens einer Stunde benötigt.

Ein weiterer Gegenstand der vorliegenden Erfindung ist ein Copolymer, aufgebaut aus Monomeren umfassend Isobuten und wenigstens eine vinylaromatische Verbindung, das durch das erfindungsgemäße Polymerisationsverfahren erhältlich ist. Vorzugsweise besitzen die erfindungsgemäßen Copolymere einen Gehalt an terminalen Vinyliden-Doppelbindungen (α-Doppelbindungen) von wenigstens 50 Mol-%. Besonders bevorzugt sind die erfindungsgemäßen Copolymere hochreaktiv, d.h. sie besitzen einen hohen Gehalt an terminalen Vinyliden-Doppelbindungen (α-Doppelbindungen), z.B. von wenigstens 60 Mol-%, vorzugsweise von wenigstens 70 Mol-%, besonders bevorzugt von wenigstens 80 Mol-%, stärker bevorzugt wenigstens 85 Mol-% und insbesondere von wenigstens 90 Mol-%, z.B. von wenigstens 95 Mol%, oder von etwa 100 Mol-%.

Bevorzugt handelt es sich bei der vinylaromatischen Verbindung um Styrol oder 4-Methylstyrol und besonders bevorzugt um Styrol. Dementsprechend sind besonders bevorzugte Copolymere Isobuten-Styrol-Copolymere.

Im erfindungsgemäßen Copolymer beträgt der Gesamtanteil an einpolymerisierter vinylaromatischer Verbindung, bezogen auf das Gesamtgewicht des Polymers, vorzugsweise 5 bis 95 Gew.-% und besonders bevorzugt 30 bis 70 Gew.-%.

Beim erfindungsgemäßen Copolymer handelt es sich vorzugsweise um ein Blockcopolymer, z.B. um ein Diblock-, Triblock- oder ein höheres Blockcopolymer, das wenigstens einen Polyisobuten-Block und wenigstens einen Block aus vinylaromatischen Verbindungen umfasst, wobei es sich bei dem Block aus vinylaromatischen Verbindungen vorzugsweise um einen Styrolblock handelt. Vorzugsweise stellt dabei der Polyisobutenblock den terminalen, d.h. den zuletzt gebildeten Block dar. Besonders bevorzugt ist das Blockcopolymer ein Diblockcopolymer, das aus einem Polyisobutenblock und einem vinylaromatischen Block aufgebaut ist, wobei der terminale Block vorzugsweise ein Polyisobutenblock ist. Besonders bevorzugt ist der Block aus vinylaromatischen Verbindungen ein Styrolblock.

Vorzugsweise besitzen die erfindungsgemäßen Copolymere ein zahlenmittleres Molekulargewicht Mₙ von 500 bis 1.000.000. Je nach Verwendungszweck besitzen die erfindungsgemäßen Copolymere vorzugsweise ein höheres Molekulargewicht oder vorzugsweise ein niedrigeres Molekulargewicht. Sollen die erfindungsgemäßen Copolymere beispielsweise als Thermoplaste eingesetzt werden, so besitzen sie ein zahlenmittleres Molekulargewicht Mₙ von vorzugsweise 10.000 bis 1.000.000, besonders bevorzugt von 50.000 bis 1.000.000 und insbesondere von 50.000 bis 500.000. Sollen die erfindungsgemäßen Copolymere beispielsweise Funktionalisierungsreaktionen zur Einführung polarer Kopfgruppen, wie sie z.B. in der WO 03/074577 oder in der deutschen Patentanmeldung DE 102005002772.5 beschrieben sind, unterworfen werden, so besitzen sie ein zahlenmittleres Molekulargewicht Mₙ von vorzugsweise 500 bis 250.000, besonders bevorzugt von 500 bis 100.000, stärker bevorzugt von 500 bis 80.000 und insbesondere von 1000 bis 60.000.

Erfindungsgemäße Copolymere, die aufgebaut sind aus Monomeren umfassend Isobuten und wenigstens eine vinylaromatische Verbindung, und speziell Isobuten-Styrol-Copolymere lassen sich nicht nur an den Vinyliden-terminierten Kettenenden analog zu hochreaktiven Polyisobutenen funktionalisieren, um sie für eine bestimmte Anwendung zu optimieren, sie besitzen zudem thermoplastische und/oder elastische Eigenschaften. Insbesondere sind sie bzw. ihre Funktionalisierungsprodukte für eine Anwendung in Folien, Dichtungsmaterialien, Klebstoffen, Haftvermittler, medizinischen Produkten, z.B. in Form bestimmter Implantate, vor allem Arterienimplantate (Stents), und Compounds geeignet.

Die Funktionalisierung kann analog zu Derivatisierungsreaktionen erfolgen, wie sie z.B. in der WO 03/074577 oder in der deutschen Patentanmeldung DE 102005002772.5 beschrieben sind, worauf hiermit in vollem Umfang Bezug genommen wird.

Die Erfindung wird nunmehr durch die folgenden, nicht limitierenden Beispiele veranschaulicht.

### Beispiele

### Allgemeines

Alle Synthesen und Umsetzungen erfolgten unter Argonatmosphäre unter Anwendung der Schlenk-Technik. Methylenchlorid wurde über Calciumhydrid getrocknet, n-Hexan wurde über Natrium/Benzophenon getrocknet und über 4A-Molekularsieb aufbewahrt, Acetonitril wurde über Calciumhydrid getrocknet und über Molekularsieb 3A aufbewahrt.

Als Katalysatoren wurden Verbindungen der Formel I.1 eingesetzt 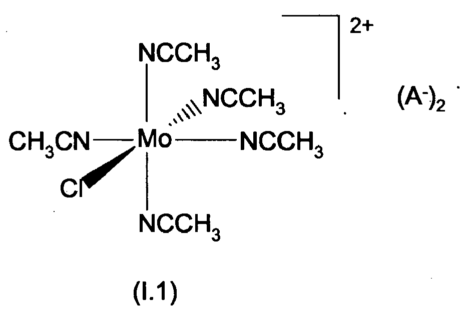 worin A- für eines der Anionen A, B oder C steht

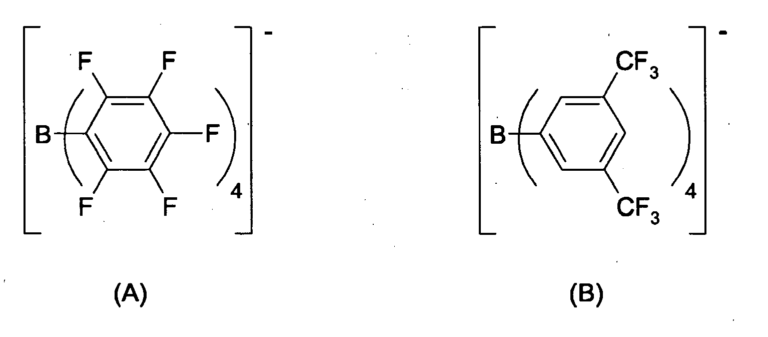

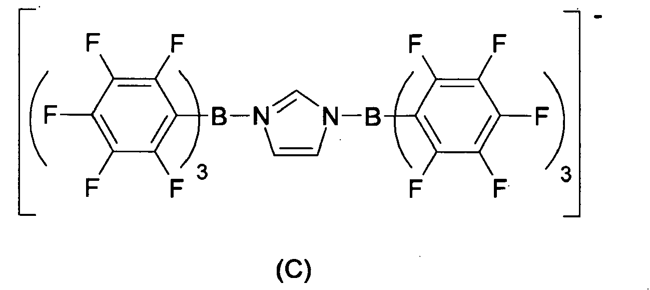

Der Katalysator aus dem Komplex I.1 mit dem Gegenanion A wird als Katalysator I.1.A bezeichnet, der entsprechende Katalysator mit dem Anion B als I.1.B und derjenige mit dem An ion C als I.1.C.

Das in die Herstellungsverfahren der Katalysatoren I.1.A, I.1.B und I.1.C eingesetzte Mo₂Cl₄(NCCH₃)₄ wurde gemäß der Vorschrift von F. A. Cotton, R. H. Niswander, J. C. Sekutowski, Inorg. Chem. 1979, 18, 1149 hergestellt.

Außerdem wurde ein Katalysator II oder Formel [CeCl(CH₃CN)₅]²⁺ (A-)₂, worin A- für ein Boratanion der Formel (B) steht, eingesetzt.

### 1.1 Herstellung des Katalysators I.1.A

10 ml einer Lösung aus [Ag(NCCH₃)₄][B(C₆F₅)₄] (344,0 mg, 0,36 mmol) in trockenem Acetonitril wurden bei Raumtemperatur unter Argon mit Mo₂(NCCH₃)₄Cl₄ (45,0 mg, 0,009 mmol) versetzt. Die Reaktionslösung wurde im Dunkeln über Nacht gerührt. Der gebildete Niederschlag (AgCl) wurde entfernt und das Filtrat wurde unter verringertem Druck auf ein Volumen von 1,0 ml eingeengt und bei - 35°C aufbewahrt. Man erhielt den Katalysator I.1.A in Form dunkelgrüner Kristalle in einer Ausbeute von 0,35 g (75 % der Theorie).
Elementaranalyse von C₅₈H₁₅MoB₂ClF₄₀N₅ (1694,751):
Berechnet: C: 41,10 %, H: 0,89 %, N: 4,13 %.
Gefunden: C: 37,14 %, H: 1,21 %, N: 3,98 %.

IR (KBr, cm⁻¹) (ausgewählte Banden: ν_{CN}): 2288, 2321.

### 1.2 Herstellung des Katalysators I.1.B

Eine Lösung aus Ag[B{C₆H₃(CF₃)₂}₄] (0,65 g, 0,67 mmol) in 25 ml trockenem Acetonitril wurde bei Raumtemperatur unter Argon mit Mo₂(NCCH₃)₄Cl₄ (90 mg, 0,17 mmol) versetzt. Die Reaktionslösung wurde im Dunkeln über Nacht gerührt. Der gebildete Niederschlag (AgCl) wurde entfernt und das Filtrat wurde unter verringertem Druck auf ein Volumen von 3 ml eingeengt und bei - 35°C aufbewahrt. Man erhielt den Katalysator I.1.B in Form eines dunkelgrünen Pulvers in einer Ausbeute von 0,27 g (77 % der Theorie).
Elementaranalyse von C₇₄H₃₉MoB₂ClF₄₈N₅ (2063,108):
Berechnet: C: 43,08 %, H: 1,91 %, N: 3,39 %.
Gefunden: C: 42,60 %, H: 2,42 %, N: 2,95 %.

IR (KBr, cm⁻¹) (ausgewählte Banden: ν_{CN}): 2322, 2290.

### 1.3 Herstellung des Katalysators I.1.C

Eine Lösung aus Ag[(C₆F₅)₃B-C₃H₃N₂-B(C₆F₅)₃] (1,00 g, 0,83 mmol) in 25 ml trockenem Acetonitril wurde bei Raumtemperatur unter Argon mit Mo₂(NCCH₃)₄Cl₄ (100 mg, 0,21 mmol) versetzt. Die Reaktionslösung wurde im Dunkeln über Nacht gerührt. Der gebildete Niederschlag (AgCl) wurde entfernt und das Filtrat wurde unter verringertem Druck auf ein Volumen von 3 ml eingeengt und bei - 35 °C aufbewahrt. Man erhielt den Katalysator I.1.C in Form eines dunkelgrünen kristallinen Feststoffs in einer Ausbeute von 0,45 g (85 % der Theorie).
Elementaranalyse von C₈₈H₂₁MoB₄ClF₆₀N₉(2518,768):
Berechnet: C: 41,96 %, H: 0,84 %, N: 5,00 %.
Gefunden: C: 41,67 %, H: 1,21 %, N: 5,47 %.

IR (KBr, cm⁻¹) (ausgewählte Banden: ν_{CN}): 2313, 2286.

### 2. Polymerisationsreaktionen

### 2.1 Homopolymerisation von Isobuten

### Allgemeines Vorgehen:

Druckröhrchen werden bei -40 °C mit 20 ml trockenem Dichlormethan gefüllt und mit dem Katalysator und einem Magnetstäbchen versetzt. Dann wird kondensiertes Isobuten hinzugegeben. Die Druckröhrchen werden versiegelt und aus dem Kühlbad entfernt. Die Polymerisation wird in einem auf die gewünschte Temperatur temperierten Wasserbad durchgeführt. Die Polymerisation wird durch Zugabe von 5 ml Methanol beendet. Das Reaktionsgemisch wird mit 0,2 g 2,2'-Methylen-bis(4-methyl-6-di-tert-butyl)phenol versetzt, um eine Oxidation zu verhindern. Die Lösungsmittel werden im Ölpumpenvakuum entfernt und das erhaltene Polymer wird im Feinvakuum bei 30°C bis zur Gewichtskonstanz getrocknet. Die Polymere werden unter Inertgasatmosphäre aufbewahrt.

Die Bestimmung des Gehalts an terminalen Vinyliden-Doppelbindungen erfolgte NMRspektroskopisch durch Auswertung der Integrale der Protonen am Kettenterminus.

### Beispiel 2.1.1: Polymerisation von Isobuten in Gegenwart des Katalysators I.1.A

### Reaktionsbedingungen:

Isobuten-Konzentration: 1,78 mol/l
Katalysatorkonzentration: 0,5 x 10⁻⁴ mol/I
Lösungsmittel: Dichlormethan
Reaktionstemperatur: 30°C
Polymerisationsdauer: 5 Stunden

### Ergebnisse:

Umsatz: 72 %
Mₙ des Polymers: 600
PDI des Polymers: 1,67
Anteil der Vinyliden-Doppelbindungen: 75 %

### Vergleichsbeispiel 2.1.1:

Verwendung eines Katalysators der Formel [Mn(CH₃CN)₆]²⁺ 2(A-) (Herstellung gemäß EP-A-1344785), worin A⁻ für das Anion A steht.

### Reaktionsbedingungen:

Isobuten-Konzentration: 1,78 mol/I
Katalysatorkonzentration: 0,5 x 10⁻⁴ mol/I
Lösungsmittel: Dichlormethan
Reaktionstemperatur: 30°C
Polymerisationsdauer: 20 Stunden

### Ergebnisse:

Umsatz: 71 %
Mₙ des Polymers: 600
PDI des Polymers: 1,7
Anteil der Vinyliden-Doppelbindungen: 81 %

### Beispiel 2.1.2: Polymerisation von Isobuten in Gegenwart des Katalysators I.1.B

Reaktionsbedingungen:
Isobuten-Konzentration: 1,78 mol/l
Katalysatorkonzentration: 0,5 x 10⁻⁴ mol/I
Lösungsmittel: Dichlormethan
Reaktionstemperatur: 30 °C
Polymerisationsdauer: 0,5 Stunden

### Ergebnisse:

Umsatz: 53 %
Mₙ des Polymers: 1100
Anteil der Vinyliden-Doppelbindungen: 82 %

### Beispiel 2.1.3 Polymerisation von Isobuten in Gegenwart des Katalysators I.1.C

### Reaktionsbedingungen:

Isobuten-Konzentration: 1,78 mol/l
Katalysatorkonzentration: 0,5 x 10⁻⁴ mol/l
Lösungsmittel: Dichlormethan
Reaktionstemperatur: 30 °C
Polymerisationsdauer: 0,5 Stunden

### Ergebnisse:

Umsatz: 90 %
Mₙ des Polymers: 1700
Anteil der Vinyliden-Doppelbindungen: 74 %

### Beispiel 2.1.4 Polymerisation von Isobuten in Gegenwart des Katalysators II

### Reaktionsbedingungen:

Isobuten-Konzentration: 1,78 mol/l
Katalysatorkonzentration: 0,5 x 10⁻⁴ mol/l
Lösungsmittel: Dichlormethan
Reaktionstemperatur: 30 °C
Polymerisationsdauer: 0,5 Stunden

### Ergebnisse:

Umsatz: 89 %
Mₙ des Polymers: 1700
Anteil der Vinyliden-Doppelbindungen: 76 %

## Patentansprüche

1. Katalysator der Formel I
[M(L)ₐ (Z)_{b}]^{m+} m (A⁻) (I) (I)
worin
M für Mo steht;
L für ein Solvensmolekül steht, das ausgewählt ist unter Nitrilen;
Z für Chlorid steht;
A⁻ für ein schwach oder nicht koordinierendes Anion steht, das ausgewählt ist unter B(Ar)₄- und verbrückten Anionen der Formel [(Ar)₃B-(µ-Y)-B(Ar)₃]-, wobei
Ar für Phenyl steht, das 1 bis 5 Substituenten tragen kann, die ausgewählt sind unter Halogen, C₁-C₄-Alkyl und C₁-C₄-Halogenalkyl; und
Y für eine verbrückende Gruppe steht;
a für eine ganze Zahl größer oder gleich 1 steht;
b für eine ganze Zahl größer oder gleich 1 steht;
wobei die Summe aus a und b 4 bis 8 beträgt; und
m für eine ganze Zahl von 1 bis 6 steht.

2. Katalysator nach Anspruch 1, worin die Solvensmoleküle L gleich oder verschieden sind und ausgewählt sind unter Nitrilen der Formel N≡C-R¹, worin R¹ für C₁-C₈-Alkyl oder Aryl steht.

3. Katalysator nach Anspruch 2, worin L für ein Nitril der Formel N≡C-R¹ steht, worin R¹ für Methyl, Ethyl oder Phenyl steht.

4. Katalysator nach einem der vorhergehenden Ansprüche, worin Y unter cyclischen verbrückenden Gruppen ausgewählt ist.

5. Katalysator nach einem der vorhergehenden Ansprüche, worin a für eine ganze Zahl von 1 bis 5 steht.

6. Katalysator nach einem der vorhergehenden Ansprüche, worin b für eine ganze Zahl von 1 bis 4 steht.

7. Katalysator nach einem der vorhergehenden Ansprüche, worin m für eine ganze Zahl von 1 bis 3 steht.

8. Verwendung eines Katalysators gemäß der Definition in einem der Ansprüche 1 bis 7 als Polymerisationskatalysator bei der Polymerisation von olefinisch ungesättigten Verbindungen.

9. Verwendung nach Anspruch 8, wobei es sich bei den olefinisch ungesättigten Verbindungen um Isobuten, Isobuten-haltige Monomerengemische oder vinylaromatische Verbindungen handelt.

10. Verfahren zur Polymerisation von olefinisch ungesättigten Verbindungen, **dadurch gekennzeichnet, dass** man die olefinisch ungesättigten Verbindungen in Gegenwart eines Katalysators gemäß der Definition in einem der Ansprüche 1 bis 7 polymerisiert.

11. Verfahren nach Anspruch 10, zur Herstellung von hochreaktiven Isobutenhomo- oder -copolymeren.

12. Verfahren nach einem der Ansprüche 10 oder 11, zur Herstellung von hochreaktiven Isobutenhomo- oder -copolymeren mit einem Gehalt an terminalen Vinyliden-Doppelbindungen von wenigstens 80 Mol-%.

13. Verfahren nach einem der Ansprüche 10 bis 12, zur Herstellung von hochreaktiven Isobutenhomo- oder -copolymeren mit einem zahlenmittleren Molekulargewicht Mₙ von 500 bis 1.000.000.

14. Verfahren nach einem der Ansprüche 10 bis 13, zur Herstellung von hochreaktiven Isobutenhomo- oder -copolymeren mit einer Polydispersität von höchstens 2.

15. Verfahren nach einem der Ansprüche 10 bis 14, zur Herstellung von Copolymeren, die aufgebaut sind aus Monomeren umfassend Isobuten und wenigstens eine vinylaromatische Verbindung.

16. Verfahren nach einem der Ansprüche 10 bis 15, **dadurch gekennzeichnet, dass** man bei einer Temperatur von wenigstens 0°C polymerisiert.

## Claims

1. A catalyst of the formula I
[M(L)ₐ (Z)_{b}]^{m+} m (A⁻) (I)
in which
M is Mo;
L is a solvent molecule which is selected from nitriles;
Z is chloride;
A⁻ is a weakly coordinating or non coordinating anion which is selected from B(Ar)₄⁻ and bridged anions of the formula [(Ar)₃B-(µ-Y)-B(Ar)₃], where
Ar is phenyl which may bear from 1 to 5 substituents which are selected from halogen, C₁-C₄-alkyl and C₁-C₄-haloalkyl; and
Y is a bridging group;
a is an integer greater than or equal to 1;
b is an integer greater than or equal to 1;
where the sum of a plus b is from 4 to 8; and
m is an integer from 1 to 6.

2. The catalyst according to claim 1, in which the solvent molecules L are the same or different and are selected from nitriles of the formula N≡C-R¹ in which R¹ is C₁-C₈-alkyl or aryl.

3. The catalyst according to claim 2, in which L is a nitrile of the formula N≡C-R¹ in which R¹ is methyl, ethyl or phenyl.

4. The catalyst according to any of the preceding claims, in which Y is selected from cyclic bridging groups.

5. The catalyst according to any of the preceding claims, in which a is an integer from 1 to 5.

6. The catalyst according to any of the preceding claims, in which b is an integer from 1 to 4.

7. The catalyst according to any of the preceding claims, in which m is an integer from 1 to 3.

8. The use of a catalyst as defined in any of claims 1 to 7 as a polymerization catalyst in the polymerization of olefinically unsaturated compounds.

9. The use according to claim 8, wherein the olefinically unsaturated compounds are isobutene, isobutenic monomer mixtures or vinylaromatic compounds.

10. A process for polymerizing olefinically unsaturated compounds, which comprises polymerizing the olefinically unsaturated compounds in the presence of a catalyst as defined in any of claims 1 to 7.

11. The process according to claim 10 for preparing highly reactive isobutene homo- or copolymers.

12. The process according to either of claims 10 and 11 for preparing highly reactive isobutene homo- or copolymers having a content of terminal vinylidene double bonds of at least 80 mol%.

13. The process according to any of claims 10 to 12 for preparing highly reactive isobutene homo- or copolymers having a number-average molecular weight Mₙ of from 500 to 1 000 000.

14. The process according to any of claims 10 to 13 for preparing highly reactive isobutene homo- or copolymers having a polydispersity of at most 2.

15. The process according to any of claims 10 to 14 for preparing copolymers which are formed from monomers comprising isobutene and at least one vinylaromatic compound.

16. The process according to any of claims 10 to 15, wherein polymerization is effected at a temperature of at least 0°C.

## Revendications

1. Catalyseur de formule I
[M(L)ₐ(Z)_{b}]^{m+} m(A)⁻ (I)
dans laquelle
M représente Mo ;
L représente une molécule de solvant, qui est choisie parmi les nitriles ;
Z représente le chlorure ;
A⁻ représente un anion faible ou non coordonné, qui est choisi parmi B(Ar)₄₋ et les anions pontés de formule [(Ar)₃B-(µ-Y)-B(Ar)₃]⁻, où
Ar représente une groupe phényle qui peut porter de 1 à 5 substituants, qui sont choisis parmi des atomes d'halogène, des groupes alkyle en C₁-C₄ et halogénoalkyle en C₁-C₄ ; et
Y représente un groupe pontant ;
a représente un nombre entier égal ou supérieur à 1 ;
b représente un nombre entier égal ou supérieur à 1 ;
la somme de a et b allant de 4 à 8 ; et
m représente un nombre valant de 1 à 6.

2. Catalyseur selon la revendication 1, dans lequel les molécules de solvant L sont identiques ou différentes et sont choisies parmi les nitriles de formule N≡C-R¹, où R¹ représente un groupe alkyle en C₁-C₈ ou aryle.

3. Catalyseur selon la revendication 2, dans lequel L représente un nitrile de formule N≡C-R¹, où R¹ représente le groupe méthyle, éthyle ou phényle.

4. Catalyseur selon l'une quelconque des revendications précédentes, dans lequel Y est choisi parmi des groupes cycliques pontants.

5. Catalyseur selon l'une quelconque des revendications précédentes, dans lequel a représente un nombre entier valant de 1 à 5.

6. Catalyseur selon l'une quelconque des revendications précédentes, dans lequel b représente un nombre entier valant de 1 à 4.

7. Catalyseur selon l'une quelconque des revendications précédentes, dans lequel m représente un nombre entier valant de 1 à 3.

8. Utilisation d'un catalyseur selon la définition dans l'une quelconque des revendications 1 à 7, en tant que catalyseur de polymérisation dans la polymérisation de composés à insaturation oléfinique.

9. Utilisation selon la revendication 8, dans laquelle les composés à insaturation oléfinique consistent en isobutène, en des mélanges de monomères contenant de l'isobutène ou en des composés vinylaromatiques.

10. Procédé pour la polymérisation de composés à insaturation oléfinique, **caractérisé en ce que** les composés à insaturation oléfinique sont polymérisés en présence d'un catalyseur selon la définition dans l'une quelconque des revendications 1 à 7.

11. Procédé selon la revendication 10, pour la production d'homopolymères ou de copolymères d'isobutène hautement réactifs.

12. Procédé selon la revendication 10 ou 11, pour la production d'homopolymères ou de copolymères d'isobutène hautement réactifs ayant une teneur en doubles liaisons vinylidène terminales d'au moins 80 % en moles.

13. Procédé selon l'une quelconque des revendications 10 à 12, pour la production d'homopolymères ou de copolymères d'isobutène hautement réactifs ayant une masse moléculaire moyenne en nombre Mₙ de 500 à 1 000 000.

14. Procédé selon l'une quelconque des revendications 10 à 13, pour la production d'homopolymères ou de copolymères d'isobutène hautement réactifs ayant une polydispersité de 2 au maximum.

15. Procédé selon l'une quelconque des revendications 10 à 14, pour la production de copolymères qui sont constitués de monomères comprenant l'isobutène et au moins un composé vinylaromatique.

16. Procédé selon l'une quelconque des revendications 10 à 15, **caractérisé en ce qu'**on effectue la polymérisation à une température d'au moins 0 °C.
